# EUROPÄISCHE PATENTSCHRIFT

(11) **EP 3 499 660 B1**
(45) Veröffentlichungstag und Bekanntmachung des Hinweises auf die Patenterteilung: **01.09.2021**
(21) Anmeldenummer: 18206992.2
(22) Anmeldetag: 19.11.2018
(51) Int. Cl.: H02B 1/44, H02B 1/052, H02B 1/06, H02B 1/20, H02B 1/42

(54) **ANORDNUNG, DIE EINE ERSTE UND EINE ZWEITE TRAGSCHIENE, EINE ABDECKUNG UND EINE ERSTE UND EINE ZWEITE HALTEEINRICHTUNG UMFASST, SOWIE VERTEILERKASTEN**
ASSEMBLY, COMPRISING A FIRST AND A SECOND MOUNTING RAILS, A COVER AND A FIRST AND A SECOND HOLDER DEVICES, AND JUNCTION BOX
AGENCEMENT COMPRENANT UN PREMIER ET UN SECOND RAILS SUPPORT, UN COUVERCLE ET UN PREMIER ET UN SECOND DISPOSITIFS SUPPORT, ET BOÎTIER DE DISTRIBUTION

(30) Priorität: 15.12.2017 DE 102017130232
(43) Veröffentlichungstag der Anmeldung: 19.06.2019
(73) Patentinhaber: ABB Schweiz AG, 5400 Baden (CH)
(72) Erfinder: Roth, Michael, 77880 Sasbach (DE)
(74) Vertreter: Wesch, Arno

(56) Entgegenhaltungen:
- EP-A1- 0 028 553
- EP-A1- 1 744 427
- EP-A2- 0 123 788
- WO-A1-2004/109883
- FR-A1- 2 308 277
- FR-A1- 2 634 326
- FR-A1- 2 956 257
- US-A- 5 683 005
- US-B1- 6 246 004

## Beschreibung

Die Erfindung betrifft eine Anordnung gemäß dem Oberbegriff des Patentanspruchs 1.

Eine Anordnung dieser Art ist aus der FR 2 634 326 A1 bekannt, dort ist ein abnehmbarer Halter als Seite einer Haube ausgestaltet. Die EP 1 744 427 A1 zeigt, dass sich Tragschienen zwischen zwei Seitenflügeln erstrecken, die einen Rahmen bilden. Aus der EP 0 028 553 A1 ist bekannt, eine Platte von einem Sockel wegzuschwenken.

Anordnungen der genannten Art finden beispielsweise in Verbrauchereinheiten Verwendung. Insbesondere finden sie Verwendung in einem Verteilerkasten der Elektroinstallation, und dabei vorzugsweise in einem Verteilerkasten zum Einbau in eine Wandöffnung.

In einem solchen Verteilerkasten sind auf Tragschienen, beispielsweise Hutschienen, eine Vielzahl von Geräten oder Schaltern montiert, wobei die Trag- bzw. Hutschienen bevorzugt parallel angeordnet sind. Bei den Geräten handelt es sich beispielsweise um Leitungsschutzschalter, Fehlerstromschutzschalter, Schaltrelais, Zeitrelais oder andere bekannte Installationsgeräte zur Montage auf Tragschienen in Installationsverteilungen.

Die Geräte oder Schalter müssen verdrahtet bzw. verkabelt werden. Die Kabel können in Verdrahtungsbereichen unter den Trag- bzw. Hutschienen verlaufen. Die Trag- bzw. Hutschienen und die Geräte oder Schalter sind durch eine Abdeckung vor ungewolltem Zugriff geschützt. Die Abdeckung wird dabei durch eine Halteeinrichtung gehalten.

Die DE 10 2016 124 609 A1 zeigt einen Verteilerkasten zum Einbau in eine Wandöffnung, mit einem Kastenboden und mit sich vom Rand des Kastenbodens aus senkrecht erstreckenden vertikalen Seitenwänden, wobei parallel zu jeweils einer der vertikalen Seitenwände eine Befestigungsleiste zur Befestigung wenigstens einer Trag- bzw. Hutschiene in einem Abstand zu der vertikalen Seitenwand angeordnet ist, wodurch zwischen der Trag- bzw. Hutschiene und der benachbarten Seitenwand ein parallel zur vertikalen Seitenwand verlaufender Verdrahtungskanal zur Führung von in den Verteilerkasten zu- und herausgeführten Kabeln gebildet ist. Die Halteeinrichtung zur Halterung der Abdeckung zur zumindest abschnittsweisen Bedeckung der Tragschiene ist bei bekannten Verteilerkästen meistens an den vertikalen Seitenwänden des Verteilerkastens befestigt.

Es sind auch bereits Halteeinrichtungen bekannt, welche in einem seitlichen Bereich zwischen einem Ende der Trag- bzw. Hutschiene und einer Gehäusewand, insbesondere einer vertikalen Seitenwand, einer Verbrauchereinheit bzw. eines Verteilerkastens montiert sind. Hierdurch wird jedoch wertvoller Montageraum, der bei der Verkabelungen benötigt wird, in ungünstiger Weise ausgefüllt bzw. blockiert.

Der Erfindung liegt daher die Aufgabe zugrunde, eine Anordnung mit einer Abdeckung und Tragschienen anzugeben, bei welcher auf den Trag- bzw. Hutschienen montierte Schalter und/ Geräte möglichst problemlos mit Kabeln versehen werden können.

Erfindungsgemäß wird die voranstehende Aufgabe durch eine Anordnung mit den Merkmalen des Patentanspruchs 1 gelöst.

Erfindungsgemäß ist zunächst erkannt worden, dass in Anordnungen des Stands der Technik dringend benötigter Montageraum häufig in ungünstiger Weise blockiert ist. Darauf ist erkannt worden, dass die Halteeinrichtung einer Abdeckung Potential bietet, Montageraum bereit zu stellen. Schließlich ist erkannt worden, dass ein Halter, der von einem Basisteil reversibel als Ganzes abgenommen werden kann, wertvollen Montageraum freigeben kann. Durch das Entfernen des Halters entsteht ein freier Bereich zur seitlich durchgeführten Verdrahtung von Geräten. Kabel können seitlich in Verdrahtungsbereiche eingeführt werden, die unter den Trag- bzw. Hutschienen liegen sollen.

Das Basisteil ist der Trag- bzw. Hutschiene zugeordnet, und der Halter ist vom Basisteil als Ganzes entfernbar Hierdurch kann ein Montageraum freigegeben werden, indem der Halter entfernt wird. Der Halter liegt nicht mehr als störendes Element bei der Verdrahtung vor.

Das Basisteil ist seitlich auf der Trag- bzw. Hutschiene und/ oder auf einem Ende der Trag- bzw. Hutschiene aufgesteckt, wobei der Halter auf das Basisteil aufgesteckt ist. Ein Aufstecken auf das Ende einer Trag- bzw. Hutschiene erlaubt eine rasche Montage und leichte Zugänglichkeit des Basisteils. Ein aufgesteckter Halter ist leicht von einem Basisteil, bevorzugt ohne Werkzeugeinsatz, abziehbar und wieder aufsteckbar.

Das Abziehen des Halters vom Basisteil erfolgt bevorzugt im Wesentlichen in einer Richtung, die orthogonal zur Längserstreckung der Trag-bzw. Hutschiene orientiert ist, um nicht an Komponenten der Anordnung hängen zu bleiben.

Vorteilhaft ist der Halter einem Freibereich abnehmbar zugeordnet. Sobald der Halter aus dem Freibereich entfernt ist, ist der Freibereich Teil eines Montageraums oder wird zum Montageraum, um Kabel seitlich in Verdrahtungsbereiche unter einer Hutschiene einzuführen. So kann eine Person leicht Verkabelungen bzw. Verdrahtungen vornehmen.

Vorteilhaft ermöglicht der Montageraum einen seitlichen Durchgriff unter eine Schiene in einen Verdrahtungsbereich. So kann ein Kabel von oben, also von den Geräten oder Schaltern herkommend, seitlich unter eine Hutschiene geschoben werden.

Der Montageraum erstreckt sich zwischen zwei Schienen, wobei die Enden der Schienen dem Montageraum zugewandt sind und/ oder wobei die Schienen miteinander fluchten. So kann ein Zwischenraum zwischen zwei Schienen erzeugt werden, durch den eine montierende Person hindurch greifen kann, um von der Seite kommend unter eine Hutschiene oder beide Hutschienen greifen zu können.

Bevorzugt umfasst eine Verbrauchereinheit, insbesondere ein Verteilerkasten der Elektroinstallation, eine Anordnung der hier beschriebenen Art.

In der Zeichnung zeigen
Fig.1: eine perspektivische Ansicht einer Anordnung, die nicht im Gegenstand der Erfindung liegt, umfassend eine Abdeckung und mehrere Trag-bzw. Hutschienen, welche unter der Abdeckung angeordnet sind, sowie ein Basisteil und einen Halter einer Halteeinrichtung.
Fig.2: oben eine perspektivische Ansicht der Anordnung gemäß Fig.1 ohne Abdeckung und rechts eine Detailansicht des Basisteils und des Halters,
Fig.3: links eine perspektivische Ansicht einer Anordnung gemäß einem Ausfuhrungsbeispiel, ohne seine Abdeckung und rechts eine Detailansicht eines Halters, der auf einem Basisteil aufgesteckt ist,
Fig.4: links die Anordnung gemäß Fig.3 und rechts eine Detailansicht eines Basisteils, von dem ein Halter entfernt ist, so dass ein Montageraum geschaffen ist,
Fig.5: eine Ansicht einer Anordnung gemäß einem Ausführungsbei-spiel mit auf Trag- bzw. Hutschienen montierten Geräten in Blickrich-tung orthogonal zur Längserstreckung der Hutschienen, wobei ein Halter auf ein Basisteil aufgesteckt ist und wobei der Halter einem Freibereich zugeordnet ist, aus dem er entnehmbar ist, um einen Montageraum zu schaffen, und
Fjg.6: die Anordnung gemäß Fig.5, wobei der Halter entfernt ist und der Freibereich Teil eines Montageraums zur seitlichen Verdrahtung geworden ist

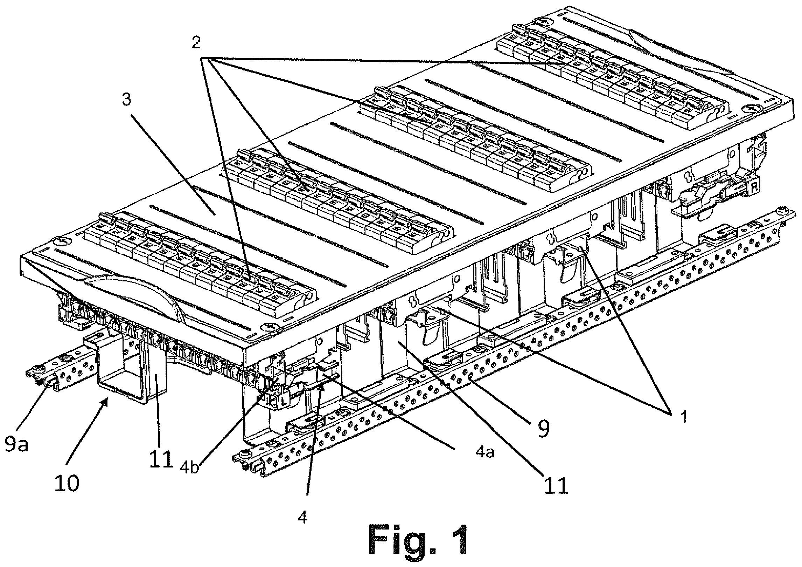

Fig.1 zeigt ausschnittsweise eine Anordnung einer Verbrauchereinheit, hier eines Verteilerkastens, umfassend eine an Befeslgungsleisten 9, 9a befestigte Tragschiene 1, nämlich eine Hutschiene, zur Aufnahme von Schaltern und/ oder Geräten 2, eine Abdeckung 3 zur zumindest abschnittsweisen Bedeckung der Tragschiene 1 und eine Halteeinrichtung 4 für die Abdeckung 3.

Die dargestellte Anordnung ist dazu vorgesehen, um in einem Verteilerkasten der Elektroinstallation angeordnet zu sein, insbesondere in einem Verteilerkasten zum Einbau in eine Wandöffnung Ein solcher Verteilerkasten hat einen Kastenboden und sich vom Rand des Kastenbodens aus senkrecht erstreckende Seitenwände . Beides ist hier der Übersichtlichkeit halber nicht dargestellt . Die dargestellt Anordnung besitzt zwei parallel zueinander in einem Abstand angeordnete Befeslgungsleisten 9, 9a, hier in Form einer Lochleiste ausgeführt.

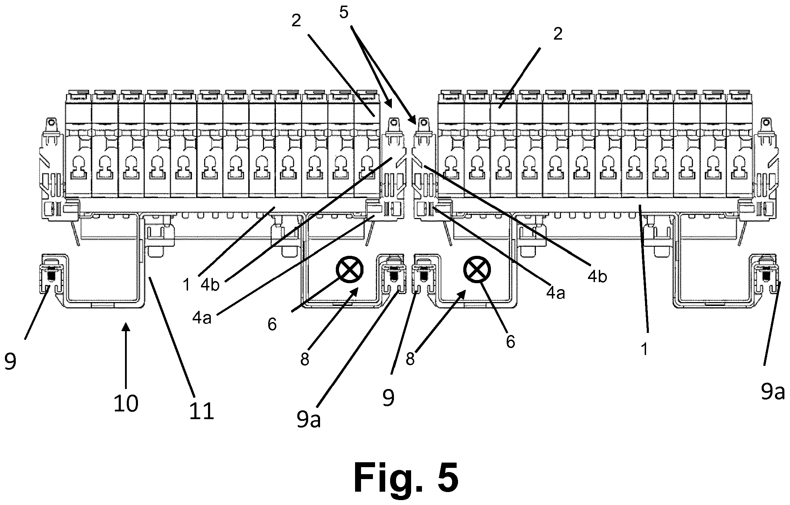

Die Tragschiene 1 ist mittels Schienenträger 10 an den Befestigungsleisten 9, 9a befestigt. Ein Schienenträger 10 hat, wie beispielsweise in Figur 5 zu erkennen ist, im Wesentlichen ein C-Profil, dessen erster kurzer Schenkel an der Befestigungsleiste 9 befestigt ist, hier im Beispiel durch eine Schraubbefestigung. An dem zweiten kurzen Schenkel ist die Tragschiene 1 befestigt. Der lange, mittlere Schenkel des C-Profils sorgt dafür, dass die Tragschiene 1 von einer durch die Befestigungsleisten 9, 9a aufgespannten Ebene beabstandet ist. Wenn die Befestigungsleisten 9, 9a am Boden einer Verteilerkastens angebracht sind, ist dadurch also bewirkt, dass zwischen der Tragschiene 1 und dem Boden des Verteilerkastens ein freier Raum entsteht. In diesem können beispielsweise Zuleitungen verlegt werden.

Die Anordnung, umfassend die Befestigungsleisten 9, die daran befestigten Tragschienen 1 und die an den Tragschienen 1 befestigte Abdeckung kann auch in anders ausgebildete Verbrauchereinheiten eingesetzt werden, beispielsweise in einen Verteilerkasten zur Aufputzmontage oder in einen frei stehenden Verteilerschrank.

Konkret sind hier in Figur 1 vier Tragschienen 1, hier als vier Hutschienen ausgebildet, gezeigt, auf denen Geräte 2 montiert sind. Die Geräte 2 durchgreifen die Abdeckung 3 an dafür vorgesehenen Ausnehmungen. Die Abdeckung 3 ist bevorzugt aus einem Kunststoff gefertigt. Die Halteeinrichtung 4 fixiert die Abdeckung 3 derart, dass diese nicht herabfallen oder ohne Lösen von Schrauben oder anderen Mitteln abgenommen werden kann. Die Abdeckung 3 ist mittels der Halteeinrichtung 4 an den Tragschienen 1 befestigt und ist damit Teil einer einheitlichen Baugruppe, die in den Verteilerkasten als Ganzes eingesetzt werden kann.

Die Halteeinrichtung 4 ist zweiteilig ausgebildet. Die Halteeinrichtung 4 weist ein Basisteil 4a und einen Halter 4b auf, wobei der Halter 4b zumindest teilweise vom Basisteil 4a zur Schaffung eines Montageraums 7 entfernbar ist. Das Entfernen kann ohne Werkzeugeinsatz erfolgen.

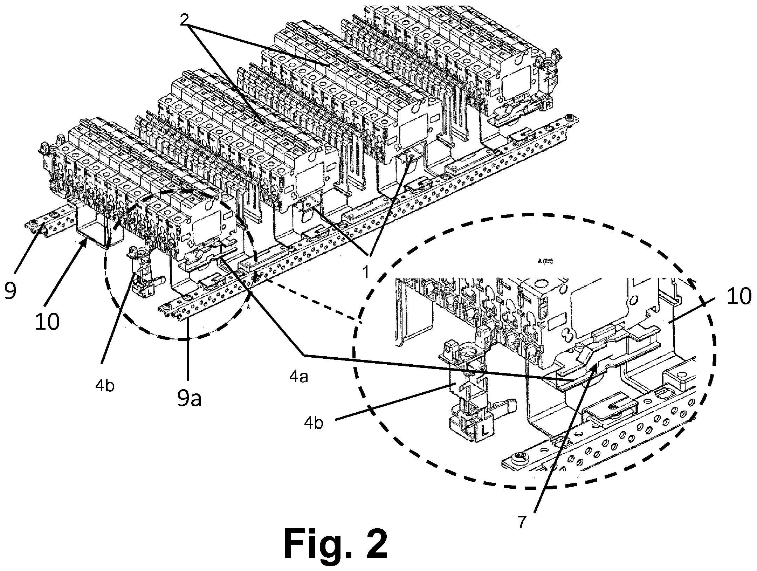

Fig. 2 zeigt in der oberen Ansicht die Anordnung gemäß Fig. 1 ohne Abdeckung 3 und rechts unten eine Detailansicht des Basisteils 4a und des Halters 4b.

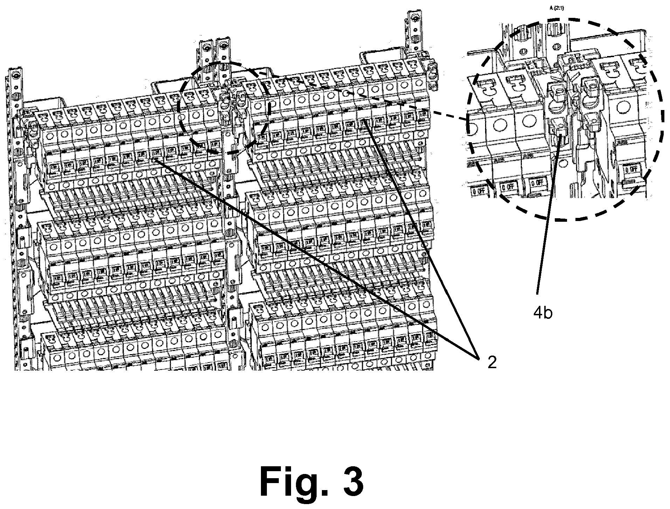

Fig. 3 zeigt links die Anordnung mit Geräten 2 ohne Abdeckung 3 und rechts eine Detailansicht eines Halters 4b, der auf einem Basisteil 4a aufgesteckt ist. Das Basisteil 4a ist seitlich auf einer Schiene 1, nämlich auf dem Ende der Schiene 1 aufgesteckt, wobei der Halter 4b auf das Basisteil 4a aufgesteckt ist. Die Schiene 1 ist als Hutschiene ausgestaltet. Der Schiene 1 liegt eine weitere Schiene 1 kollinear fluchtend gegenüber, wobei zwischen den Schienen 1 die Basisteile 4a und die Halter 4b angeordnet sind.

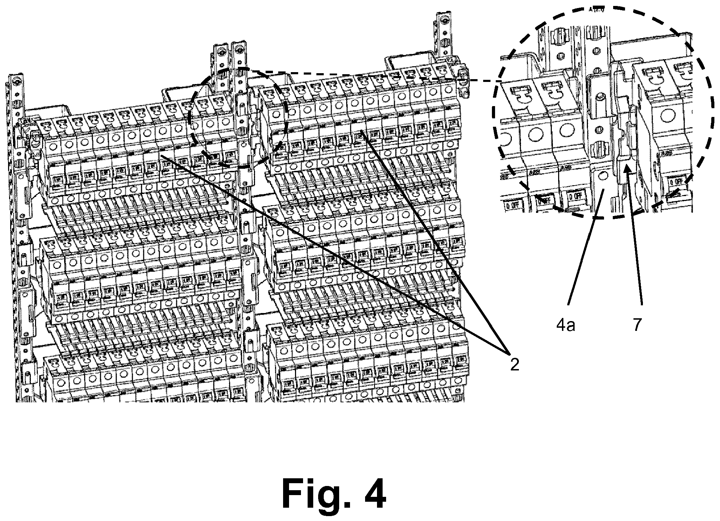

Fig. 4 zeigt links die Anordnung gemäß Fig. 3 und rechts eine Detailansicht eines Basisteils 4a, von dem ein Halter 4b entfernt ist. Das Basisteil 4a ist der Tragschiene 1, nämlich der Hutschiene, zugeordnet und der Halter 4b ist vom Basisteil 4a als Ganzes entfernt. So ist ein Montageraum 7 geschaffen.

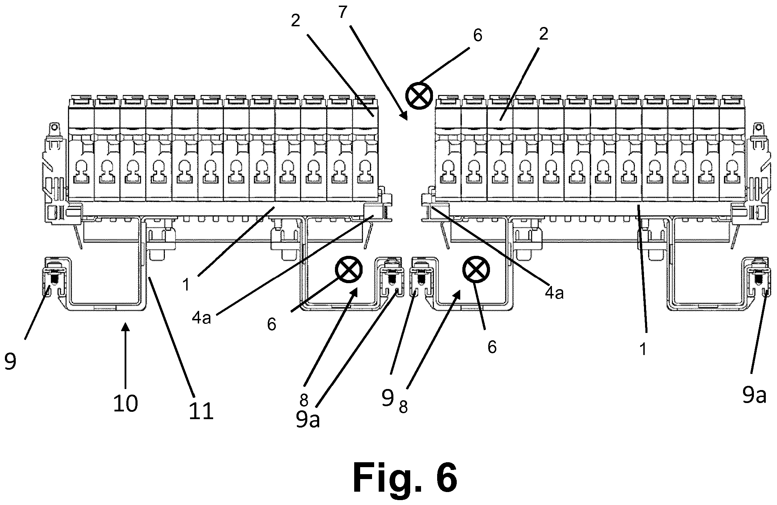

Fig. 5 zeigt in einer weiteren Ansicht schematisch eine Anordnung mit auf Tragschienen 1, nämlich Hutschienen, montierten Geräten 2, wobei ein Halter 4b auf ein Basisteil 4a aufgesteckt ist und wobei der Halter 4b einem Freibereich 5 zugeordnet ist, aus dem er entnehmbar ist, um einen Montageraum 7 zu schaffen. In der Konfiguration wie in Figur 5 dargestellt ist der Freibereich 5 mit dem Halter 4b belegt. Wenn der Halter 4b von dem Basisteil 4a entfernt wird, dann wird der Freibereich 5 frei und es kann in der dann entstehenden Verdrahtungs-Konfiguration durch den Freibereich 5 eine seitliche Verdrahtung vorgenommen werden, siehe Figur 6. Die Tragschienen 1 sind an Schienenträgern 10 befestigt, und diese sind an Befestigungsleisten 9, 9a befestigt, hier angeschraubt.

Konkret sind zwei miteinander fluchtende und kollinear angeordnete Hutschienen gezeigt, deren Enden sich gegenüberliegen. Auf jedem Ende ist ein Basisteil 4a aufgesteckt und auf jedem Basisteil ist ein Halter 4b aufgesteckt. Jeder Halter 4b ist seinem Freibereich 5 abnehmbar zugeordnet.

Fig. 6 zeigt die Anordnung gemäß Fig. 5, wobei die Halter 4b entfernt sind und der jeweilige Freibereich 5 Teil eines relativ großen Montageraums 7 zur seitlichen Verdrahtung geworden ist.

Es sind schematisch Kabel 6 dargestellt. Der relativ große Montageraum 7 ist zur seitlichen Verdrahtung vorgesehen. Bei entferntem Halter 4b bzw. bei entfernten Haltern 4b können hier Kabel 6, in der Zeichenebene von oben kommend, unter einer Hutschiene seitlich eingeführt werden. Die Kabel 6 können in einen Verdrahtungsbereich 8 unter einer Hutschiene bzw. unter zwei Hutschienen eingeführt werden. Der Verdrahtungsbereich 8 wird dabei seitlich, in dem von dem schmalen Ende der Tragschiene 1 weg weisenden Bereich, von dem langen Schenkel 11 des Schienenträgers 10 begrenzt. Die Schienenträger 10 bilden somit gewissermaßen einen Kabelkanal für die durch den Montageraum 7 bei abgenommenen Haltern 4b eingeführten Kabel bzw. Drähte bzw. Verkabelungen.

Fig. 6 zeigt, dass der Montageraum 7 einen seitlichen Durchgriff unter zwei Schienen 1 in Verdrahtungsbereiche 8 ermöglicht. Der Montageraum 7 erstreckt sich zwischen zwei Schienen 1, wobei die Enden der Schienen 1 dem Montageraum 7 zugewandt sind und wobei die Schienen 1 miteinander fluchten. Vorzugsweise werden in einem größeren Verteilerkasten zwei Sätze mit jeweils einer Tragschiene und einer Halteeinrichtung seitlich aneinander gereiht eingesetzt, um eine größere Anzahl von Vorrichtungen 2 in dem Verteilerkasten unterzubringen. Damit wird möglich, wie in Figur 6 zu sehen ist, das s auch im Bereich zwischen zwei solchen Sätzen auf einfach Art und Weise eine Verdrahtung oder eine Verlegung von Kabeln ermöglicht ist.

**Bezugszeichenliste**

| | |
|---|---|
| 1 | Tragschiene, Hutschiene |
| 2 | Gerät |
| 3 | Abdeckung |
| 4 | Halteeinrichtung |
| 4a | Basisteil von 4 |
| 4b | Halter von 4 |
| 5 | Freibereich |
| 6 | Kabel |
| 7 | Montageraum |
| 8 | Verdrahtungsbereich unter 1 |
| 9, 9a | Befestigungsleiste |
| 10 | Schienenträger |
| 11 | Langer Schenkel |

## Patentansprüche

1. Anordnung, umfassend
- eine erste Tragschiene (1) zur Aufnahme von Geräten (2),
- eine zweite Tragschiene (1) zur Aufnahme von Geräten (2),
- wobei unter den Tragschienen (1) Verdrahtungsbereiche (8) zur Verdrahtung der Geräte (2) liegen,
- eine Abdeckung (3) zur zumindest abschnittsweisen Bedeckung der Tragschiene (1) und
- eine erste Halteeinrichtung (4) für die Abdeckung (3), die sich an einem Ende der ersten Tragschiene (1) befindet und mit der die Abdeckung (3) an der ersten Tragschiene (1) befestigt ist,
- wobei die erste Halteeinrichtung (4) zweiteilig ausgebildet ist und ein erstes Basisteil (4a) und einen ersten Halter (4b) für die Abdeckung (3) aufweist,
- wobei der erste Halter (4b) zumindest teilweise vom Basisteil (4a) zur Schaffung eines Montageraums (7) zwischen den Tragschienen (1) entfernbar ist,
- wobei das erste Basisteil (4a) der ersten Tragschiene (1) zugeordnet ist, nämlich seitlich auf der ersten Tragschiene (1) und/ oder auf einem Ende der ersten Tragschiene (1) aufgesteckt ist,
- wobei der erste Halter (4b) vom ersten Basisteil (4a) als Ganzes entfernbar ist und wobei der erste Halter (4b) auf das erste Basisteil (4a) aufgesteckt ist,
- eine zweite Halteeinrichtung (4), die sich an einem Ende der zweiten Tragschiene (1) befindet und mit der die Abdeckung (3) an der zweiten Tragschiene (1) befestigbar ist,
- wobei die zweite Halteeinrichtung (4) zweiteilig ausgebildet ist und ein zweites Basisteil (4a) und einen zweiten Halter (4b) für die Abdeckung (3) aufweist,
- wobei der zweite Halter (4b) zumindest teilweise vom zweiten Basisteil (4a) zur Schaffung eines Montageraums (7) zwischen den Tragschienen (1) entfernbar ist,
- wobei das zweite Basisteil (4a) der zweiten Tragschiene (1) zugeordnet ist, nämlich seitlich auf der zweiten Tragschiene (1) und/ oder auf einem Ende der zweiten Tragschiene (1) aufgesteckt ist,
- wobei der zweite Halter (4b) vom zweiten Basisteil (4a) als Ganzes entfernbar ist und wobei der zweite Halter (4b) auf das zweite Basisteil (4a) aufgesteckt ist,
**dadurch gekennzeichnet, dass**
- der Montageraum (7) zwischen den Tragschienen (1) sich zwischen der ersten und der zweiten Tragschiene (1) erstreckt,
- wobei zwischen der ersten und der zweiten Tragschiene (1) das erste Basisteil (4a), das zweite Basisteil (4a), der erste Halter (4b) und der zweite Halter (4b) angeordnet sind,
- wobei die Enden der ersten und zweiten Tragschiene (1) dem Montageraum (7) zwischen den Tragschienen (1) zugewandt sind und/ oder wobei die erste und die zweite Tragschiene (1) miteinander fluchten.

2. Anordnung nach Anspruch 1, wobei jeder der ersten und zweiten Halter (4b) einem Freibereich (5) abnehmbar zugeordnet ist.

3. Anordnung nach einem der voranstehenden Ansprüche, wobei der Montageraum (7) zwischen den Tragschienen (1) einen seitlichen Durchgriff unter die erste Tragschiene (1) in einen Verdrahtungsbereich (8) ermöglicht, so dass ein Kabel von oben, also von den Geräten (2) herkommend, seitlich unter die erste Tragschiene (1) schiebbar ist.

4. Anordnung nach einem der vorigen Ansprüche, wobei die Anordnung zwei Befestigungsleisten (9, 9a) umfasst, und Schienenträger (10), wobei die erste Tragschiene (1) mittels der Schienenträger (10) an den Befestigungsleisten (9, 9a) befestigt ist.

5. Anordnung nach Anspruch 4, wobei jeder der Schienenträger (10) ein C-Profil aufweist, dessen erster kurzer Schenkel an der Befestigungsleiste (9) befestigt ist, an dessen zweitem kurzen Schenkel die erste Tragschiene (1) befestigt ist, und dessen mittlerer Schenkel eine Beabstandung der ersten Tragschiene (1) von einer durch die Befestigungsleisten (9, 9a) aufgespannten Ebene bewirkt.

6. Verteilerkasten der Elektroinstallation, umfassend eine Anordnung nach einem der voranstehenden Ansprüche,

## Claims

1. Assembly comprising:
- a first support rail (1) for receiving apparatuses (2);
- a second support rail (1) for receiving apparatuses (2);
- wherein wiring regions (8) for wiring the apparatuses (2) lie below the support rails (1);
- a cover (3) for covering at least in portions the support rail (1); and
- a first holding installation (4) for the cover (3), said first holding installation (4) being situated at one end of the first support rail (1) and the cover (3) being fastened to the first support rail (1) by way of said first holding installation (4);
- wherein the first holding installation (4) is configured in two parts and has a first base part (4a) and a first holder (4b) for the cover (3);
- wherein the first holder (4b) for creating an assembly space (7) between the support rails (1) is at least in part removable from the base part (4a);
- wherein the first base part (4a) is assigned to the first support rail (1), specifically so as to be clipped-on laterally to the first support rail (1) and/or clipped onto an end of the first support rail (1);
- wherein the first holder (4b) as an entity is removable from the first base part (4a) and wherein the first holder (4b) is clipped onto the first base part (4a),
- a second holding installation (4) which is situated at one end of the second support rail (1) and by way of which the cover (3) is able to be fastened to the second support rail (1);
- wherein the second holding installation (4) is configured in two parts and has a second base part (4a) and a second holder (4b) for the cover (3) ;
- wherein the second holder (4b) for creating an assembly space (7) between the support rails (1) is at least in part removable from the second base part (4a);
- wherein the second base part (4a) is assigned to the second support rail (1), specifically so as to be clipped-on laterally to the second support rail (1) and/or clipped onto an end of the second support rail (1);
- wherein the second holder (4b) as an entity is removable from the second base part (4a), and wherein the second holder (4b) is clipped onto the second base part (4a),
**characterized in that**
- the assembly space (7) between the support rails (1) extends between the first and the second support rail (1);
- wherein the first base part (4a), the second base part (4a), the first holder (4b) and the second holder (4b) are disposed between the first and the second support rail (1);
- wherein the ends of the first and the second support rail (1) face the assembly space (7) between the support rails (1) and/or wherein the first and the second support rail (1) are mutually aligned.

2. Assembly according to Claim 1, wherein each of the first and the second holder (4b) is assigned to a void (5) so as to be removable from the latter.

3. Assembly according to one of the preceding claims, wherein the assembly space (7) between the support rails (1) enables a lateral access below the first support rail (1) into a wiring region (8) such that a cable is able to be pushed from above, thus originating from the apparatuses (2), laterally below the first support rail (1).

4. Assembly according to one of the preceding claims, wherein the assembly comprises two fastening strips (9, 9a) and rail supports (10), wherein the first support rail (1) is fastened to the fastening strips (9, 9a) by means of the rail supports (10).

5. Assembly according to Claim 4, wherein each of the rail supports (10) has a C-profile, the first short leg of the latter being fastened to the fastening strip (9), the first support rail (1) being fastened to the second short leg of said C-profile, and the central leg of said C-profile effecting a spacing of the first support rail (1) from a plane spanned by the fastening strips (9, 9a).

6. Distributor box of an electrical installation, comprising an assembly according to one of the preceding claims.

## Revendications

1. Agencement, comportant
- un premier rail de support (1) servant à la réception d'appareils (2),
- un deuxième rail de support (1) servant à la réception d'appareils (2),
- des zones de câblage (8) servant au câblage des appareils (2) étant situées en dessous des rails de support (1),
- un couvercle (3) servant à recouvrir le rail de support (1) au moins dans certaines parties et
- un premier dispositif de retenue (4) pour le couvercle (3), lequel se trouve à une extrémité du premier rail de support (1) et à l'aide duquel le couvercle (3) est fixé au premier rail de support (1),
- le premier dispositif de retenue (4) étant réalisé en deux parties et comprenant une première partie de base (4a) et un premier support (4b) pour le couvercle (3),
- le premier support (4b) pouvant être retiré au moins partiellement de la partie de base (4a) pour créer un espace de montage (7) entre les rails de support (1),
- la première partie de base (4a) étant associée au premier rail de support (1), c'est-à-dire étant enfichée latéralement sur le premier rail de support (1) et/ou sur une extrémité du premier rail de support (1),
- le premier support (4b) pouvant être retiré de la première partie de base (4a) comme un tout et le premier support (4b) étant enfiché sur la première partie de base (4a) ,
- un deuxième dispositif de retenue (4), lequel se trouve à une extrémité du deuxième rail de support (1) et à l'aide duquel le couvercle (3) est fixé au deuxième rail de support (1),
- le deuxième dispositif de retenue (4) étant réalisé en deux parties et comprenant une deuxième partie de base (4a) et un deuxième support (4b) pour le couvercle (3),
- le deuxième support (4b) pouvant être retiré au moins partiellement de la deuxième partie de base (4a) pour créer un espace de montage (7) entre les rails de support (1),
- la deuxième partie de base (4a) étant associée au deuxième rail de support (1), c'est-à-dire étant enfichée latéralement sur le deuxième rail de support (1) et/ou sur une extrémité du deuxième rail de support (1),
- le deuxième support (4b) pouvant être retiré de la deuxième partie de base (4a) comme un tout et le deuxième support (4b) étant enfiché sur la deuxième partie de base (4a),
**caractérisé en ce que**
- l'espace de montage (7) entre les rails de support (1) s'étend entre le premier et le deuxième rail de support (1),
- la première partie de base (4a), la deuxième partie de base (4a), le premier support (4b) et le deuxième support (4b) étant disposés entre le premier et le deuxième rail de support (1),
- les extrémités du premier et du deuxième rail de support (1) étant tournées vers l'espace de montage (7) entre les rails de support (1) et/ou le premier et le deuxième rail de support (1) étant alignés l'un avec l'autre.

2. Agencement selon la revendication 1, chacun des premier et deuxième supports (4b) étant associé de manière amovible à une zone libre (5).

3. Agencement selon l'une des revendications précédentes, l'espace de montage (7) entre les rails de support (1) permettant une pénétration latérale en dessous du premier rail de support (1) dans une zone de câblage (8), de sorte qu'un câble peut être glissé par le haut, c'est-à-dire en provenance des appareils (2), latéralement en dessous du premier rail de support (1).

4. Agencement selon l'une des revendications précédentes, l'agencement comportant deux baguettes de fixation (9, 9a), et des supports de rail (10), le premier rail de support (1) étant fixé aux baguettes de fixation (9, 9a) au moyen des supports de rails (10).

5. Agencement selon la revendication 4, chacun des supports de rail (10) comprenant un profilé en C dont la première branche courte est fixée à la baguette de fixation (9), à la deuxième branche courte duquel le premier rail de support (1) est fixé, et dont la branche centrale produit un espacement du premier rail de support (1) par rapport à plan défini par les baguettes de fixation (9, 9a).

6. Coffret de distribution d'une installation électrique, comportant un agencement selon l'une des revendications précédentes.
